# DEMANDE DE BREVET EUROPEEN

(11) **EP 1 043 903 A1**
(43) Date de publication de la demande: **11.10.2000**
(21) Numéro de dépôt: 00400871.0
(22) Date de dépôt: 30.03.2000
(51) Int. Cl.: H04Q 7/30

(54) **Procédé et dispositif de transmission de données sur un canal de parole**

(30) Priorité: 06.04.1999 FR 9904239
(71) Demandeur: ALCATEL, 75008 Paris (FR)
(72) Inventeur: Bonnard, Pierre, 92150 Suresnes (FR); Cruchant, Laurent, 75007 Paris (FR); Lejay, Frédéric, 75009 Paris (FR)
(74) Mandataire: Croonenbroek, Thomas Jakob

(57) **Abrégé**

L'invention concerne un procédé de transmission de données sur un canal de parole de téléphonie mobile, entre un terminal de radiotéléphonie disposant d'un type de codage de source et une unité d'émission - réception de données par l'intermédiaire d'un réseau de téléphonie mobile supportant au moins un mode de communication sans transcodage pouvant être établi entre deux téléphones mobiles ayant au moins un type de codage de source en commun. Selon le procédé lors de la négociation du mode de communication entre ledit terminal de radiotéléphonie et ladite unité d'émission et /ou de réception de données, l'unité d'émission et / ou de réception envoie un des types de codage de source disponibles dudit terminal à celui-ci pour engager ledit mode de communication sans transcodage. Puis, les données sont transmises via le réseau de téléphonie mobile dans les trames réservées aux signaux de parole codés du type de codage de source choisi pour le mode de communication.

## Description

La présente invention a pour objet un procédé de transmission de données sur un canal de parole dans le domaine de la téléphonie mobile. Dans l'invention on résout les problèmes liés aux particularités de la transmission de données quand elle est effectuée dans un canal de parole et qu'elle peut y subir des transcodages correspondant à un codage de parole dans un réseau.

Dans le domaine de la téléphonie mobile, on connaît les canaux de transmission de parole et les canaux de transmission de données. Les canaux de transmission de données nécessitent un codage différent du codage de la parole. Ils exploitent des équipements du réseau qui sont particuliers au mode de données. En pratique, un abonnement spécifique doit être souscrit à cet effet auprès d'un opérateur de téléphonie mobile. On peut de cette façon avoir accès à une transmission de données, de point à point, en mode de commutation de circuits, à une vitesse de 9600 bits par secondes.

Dans le domaine de la téléphonie cellulaire GSM, on dispose par ailleurs de moyens de transmission de données exploitant des canaux de signalisation du système cellulaire. On distingue à cet effet des canaux dits SMS (Short Message Service) qui permettent de transmettre jusqu'à 300 bits par seconde, ou des canaux dits USSD (Unstructured Supplementary Service Data) destinés à acheminer des débits de l'ordre de 800 bits par seconde. Dans les deux cas, le débit est faible. Dans le cas USSD, les informations ne transitent que d'un utilisateur vers le réseau. Dans le cas des canaux SMS, les informations peuvent être échangées d'utilisateur à utilisateur, ou du réseau vers un utilisateur et sont facturées par paquets échangés, le coût actuel étant élevé.

Le but de l'invention est de permettre la transmission de données quelconques sur un réseau de téléphonie mobile, avec un débit élevé, sans pour autant devoir souscrire un abonnement supplémentaire.

L'invention permet en particulier, de mettre en oeuvre des services d'accès à l'Internet. Elle permet également la mise à jour et la maintenance de terminaux par un constructeur.

Ce qui différencie le codage de la parole du codage des données, notamment pour la transmission en téléphonie mobile, est essentiellement la nature des informations numérisées représentatives de la parole. En effet, la parole, si elle est numérisée simplement, produit des informations numériques pléthoriques. Pour éviter dans le cadre de la téléphonie mobile les encombrements en fréquence des canaux de transmission que de trop grands débits d'informations provoqueraient, il a été mis au point des codages de la parole de type particulier.

Ces codages particuliers, dits codages de source, consistent dans leur principe à rechercher des caractéristiques représentatives de la production de la parole par l'homme. Dans ces caractéristiques, on distingue trois grandeurs. Ces grandeurs sont :
- une fréquence fondamentale (dite pitch en littérature anglo-saxonne) correspondant à une vibration des cordes vocales ;
- un filtrage correspondant aux modifications de la vibration fondamentale et résultant de la propagation de la vibration dans le système phonatoire, c'est-à-dire le larynx, le pharynx et la bouche ;
- une excitation (ou erreur) correspondant à un résidu issu de la modélisation précédente appliquée aux paroles prononcées.

Un codeur de source de type GSM établit des meilleures valeurs de ces trois types de grandeurs à partir d'un signal PCM (Pulse Code Modulation). Un signal PCM est un signal échantillonné, dans un exemple à une fréquence de 8 000Hz et quantifié sur 13 bits, à partir du signal de parole. Le débit du signal PCM est donc de 104 Kbits/s dans cet exemple. Le codeur de source effectue une étape dite d'analyse ou codage de ce signal PCM.

Il existe différents types de codage de source. Ainsi, dans l'exemple d'un réseau GSM, on distingue en particulier trois types de codage de source:
- « Full Rate », pour « plein débit » en anglais (abrégé "FR" par la suite) ; recommandation ETSI SMG 6.10,
- « Half Rate », pour « demi débit » en anglais (abrégé "HR" par la suite) ; recommandation ETSI SMG 6.20, et
- « Enhanced Full Rate », pour « plein débit rehaussé » en anglais (abrégé "EFR" par la suite) ; recommandation ETSI SMG 6.60.

Bien entendu, les principes de la présente invention sont également applicables aux autres réseaux de téléphonie mobile (DCS-1800, PCS, etc. ...).

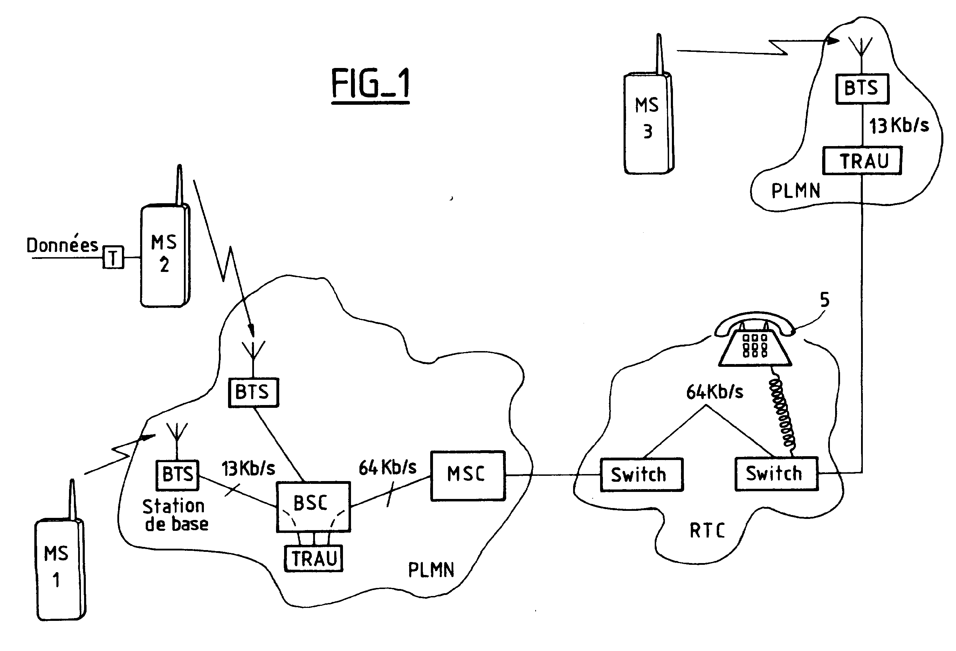

La figure 1 illustre un mode de communication entre deux mobiles n'ayant pas un type de codage de source en commun.

Comme on le voit sur cette figure, les informations de parole, codées et protégées, sont transmises par un téléphone mobile MS1 à un réseau de téléphonie mobile PLMN (Public Land Mobile Network). Le réseau PLMN effectue le décodage de canal de ces informations de parole dans des stations de base BTS (Base Transceiver Station), et produit des données au format de parole GSM. C'est-à-dire comme si elles sortaient d'un codeur de source. Puis le réseau PLMN transcode les données au format de parole GSM en des données en un format communément utilisé dans les réseaux téléphoniques à commutation de circuit. Ce dernier format dit PCM loi-A conduit à un débit de 64kbits/s correspondant à 8000 échantillons par seconde codés sur 8 bits. Ce transcodage est effectué par un équipement du réseau PLMN dit TRAU (Transcoder Rate Adaptation Unit) généralement situé à l'endroit de circuits dits MSC (Mobile services Switching Centers) de ce réseau.

Le transcodage TRAU consiste à effectuer la synthèse de la parole par un décodeur équivalent au processus inverse du codeur de source décrit plus haut. On obtient alors un signal de parole en représentation PCM (Pulse Code modulation) formé de 8000 échantillons par secondes codés sur 13 bits, comme le signal original, auquel on applique une transformation logarithmique dite Loi-A qui code chaque échantillon sur 8 bits (soit 64kbit/s). Cette nouvelle forme du signal de parole contient toutes les informations physiques du signal précédent au format GSM, aux erreurs de transmission et de transcodage près. Ce signal au format PCM loi A est transmis à un réseau commuté RTC, notamment filaire.

Dans ce réseau commuté RTC, ce signal à 64 Kbits par seconde est soit transformé en un signal analogique soit transmis dans des circuits numériques. Puis il est acheminé jusqu'à un destinataire sur ce réseau commuté, par exemple le poste téléphonique 5.

Ou bien il est acheminé jusqu'à un autre équipement de type TRAU si le destinataire est par exemple un autre téléphone mobile MS3 et lui aussi localisé sur un réseau cellulaire de téléphonie mobile. Cet autre équipement TRAU effectue une transformation inverse du premier équipement TRAU, et est dit ici TRAU inverse, pour le remettre au débit et au format GSM.

On voit donc sur cette figure 1, que le signal de parole initial au format GSM à 13 Kbits/s peut ainsi subir plusieurs transcodages TRAU ou inverse. Chaque étape de transcodage et de transmission est susceptible de dégrader le contenu de ce signal. En particulier, si on souhaite rétablir le format GSM à 13kbit/s en bout de chaîne de réception, la parole audible sera très proche de celle en bout de chaîne d'émission mais les valeurs des paramètres du modèle (LTP, LAR, RPE) peuvent être sensiblement différentes.

Quand on veut utiliser un canal de parole pour transmettre des données, il n'est donc pas possible de remplacer simplement les bits descriptifs de ces paramètres au niveau de l'émetteur par les données à transmettre pour pouvoir les récupérer au niveau du récepteur. En effet, en agissant ainsi, des erreurs apparaîtraient en bout de chaîne. De plus les transcodeurs sont bien adaptés à la manipulation de paramètres typiques de la parole humaine. Si on remplace les bits descriptifs de ces paramètres par des données brutes, on obtient des configurations de bits a priori aléatoires. Il est possible alors que les circuits d'analyse et de synthèse ne sachent pas reproduire ces configurations. Par exemple c'est le cas si ces configurations de bits représentent des variations brutales de l'énergie des blocs ou de la valeur du pitch.

Afin d'améliorer les communications entre téléphones mobiles possédant au moins un type de codage de source en commun, la norme TFO (pour "Tandem free operation" ou "Transcoder free operation" en anglais), un mode de communication sans transcodage par des TRAUs a été défini (recommandation ETSI GSM 04.53 du mois de septembre 1998).

Cette norme a été définie à partir de la constatation que deux téléphones mobiles possédant au moins un type de codage de source en commun peuvent communiquer à travers le réseau téléphonique sans qu'un transcodage par un équipement TRAU soit nécessaire.

Selon cette norme, deux téléphones mobiles se communiquent tout d'abord les types codages de sources disponibles dans chacun des téléphones. Si parmi ces types, il y en a un qui est commun aux deux, un mode de communication sans transcodage est établi, c'est-à-dire les informations de parole, codées et protégées ne sont plus transcodées dans les équipements TRAU.

En revanche, si ces deux téléphones n'ont pas de type de codage de source en commun ou si le mobile est en communication avec un poste fixe sans codeur de source, les informations de parole sont transcodées dans les équipements TRAUs comme décrit ci-dessus relatif à la figure 1.

La présente invention vise à pallier les inconvénients des procédés précités de transmission de données en proposant un procédé qui permette une transmission de données fiable et à débit élevé par le canal parole de téléphonie mobile.

A cet effet, l'invention a pour objet un procédé de transmission de données sur un canal de parole de téléphonie mobile, entre un terminal de radiotéléphonie disposant d'au moins un type de codage de source et une unité d'émission et / ou de réception de données par l'intermédiaire d'un réseau de téléphonie mobile supportant des modes de communication avec transcodage entre différents types de codage de source et au moins un mode de communication sans transcodage pouvant être établi entre deux téléphones mobiles ayant au moins un type de codage de source en commun, caractérisé en ce que
- lors de la négociation du mode de communication entre ledit terminal de radiotéléphonie et ladite unité d'émission et /ou de réception de données, l'unité d'émission et / ou de réception envoie un des types de codage de source disponibles dudit terminal à celui-ci pour engager ledit mode de communication sans transcodage,
- les données sont transmises via le réseau de téléphonie mobile dans les trames réservées aux signaux de parole codés du type de codage de source choisi pour le mode de communication.

Le procédé selon l'invention peut en outre comporter une ou plusieurs des caractéristiques suivantes :
- lors de ladite négociation du mode de communication, le terminal de radiotéléphonie envoie à ladite unité tous ses types de codage de source disponibles, et ladite unité d'émission et / ou de réception sélectionne un parmi les types de codage de source reçus et renvoie celui-ci audit terminal,
- ladite unité d'émission et / ou de réception sélectionne le premier des types de codage de source reçus,
- ladite unité d'émission et / ou de réception sélectionne le type de codage de source permettant le débit de données le plus élevé,
- lors de ladite négociation du mode de communication, ladite unité d'émission et / ou réception envoie audit terminal tous les types de codage de source autorisés sur le réseau de téléphonie mobile,
- ledit mode de communication sans transcodage est un mode de communication sans transcodage selon la norme ETSI GSM 04.53 TFO,
- ladite unité d'émission et / ou de réception est un serveur de données ou un serveur d'applications.
- ladite unité d'émission et / ou de réception est disposée dans un réseau de téléphone filaire,
- le terminal de radiotéléphonie est un téléphone mobile ou un ordinateur portable équipé de moyens pour communiquer via le réseau de téléphonie mobile.

L'invention sera mieux comprise à la lecture de la description qui suit et à l'examen des figures qui l'accompagnent. Celles-ci ne sont données qu'à titre indicatif et nullement limitatif de l'invention. Les figures montrent :
- Figure 1 : déjà commentée, une représentation schématique du réseau GSM et des différentes étapes de transcodage rencontrées ; et
- Figure 2: une représentation schématique pour illustrer les différentes étapes du procédé selon l'invention.

Le procédé selon l'invention est relatif à la transmission de données sur un canal de parole de téléphonie mobile entre d'une part un terminal de radiotéléphonie tel qu'un téléphone mobile ou un ordinateur portable équipé de moyens pour communiquer via le réseau de téléphonie mobile, le terminal disposant d'au moins un type de codage de source, et d'autre part une unité d'émission et / ou de réception de données telle qu'un serveur de données, un serveur Internet, un autre téléphone mobile ou un ordinateur, qui est par exemple raccordée à un réseau de téléphonie filaire.

Cette transmission est réalisée par l'intermédiaire d'un réseau de téléphonie mobile, comme par exemple le réseau GSM, DCS ou UMTS, supportant d'une part des modes de communication avec transcodage entre différents types de codage de source comme cela a été décrit ci-dessus relatif à la figure 1, et d'autre part au moins un mode de communication sans transcodage entre deux téléphones mobiles ayant au moins un type de codage de source en commun.

Ce type de communication sans transcodage est de préférence un mode de communication selon la norme TFO (recommandation ETSI GSM 04.53 du mois de septembre 1998). Cette recommandation est intégrée par référence à la présente description, en particulier avec ses procédures de négociations du type de communication et ses protocoles d'échange d'informations de parole entre notamment deux téléphones mobiles.

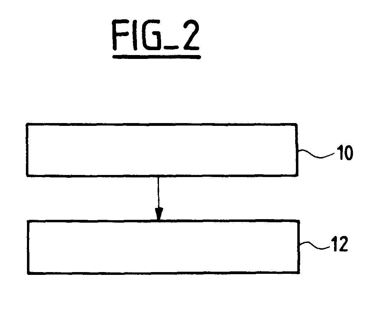

Comme représenté schématiquement sur la figure 2, lors d'une première étape 10 qui a lieu pendant la négociation du mode de communication entre ledit terminal de radiotéléphonie et ladite unité d'émission et /ou de réception de données, l'unité d'émission et / ou de réception envoie un des types de codage de source disponibles dudit terminal à celui-ci pour engager ledit mode de communication sans transcodage.

Différentes variantes sont envisagées pour la phase de négociation.

Selon une première variante, le terminal de radiotéléphonie envoie d'abord à ladite unité tous ses types de codage de source disponibles.

Si on suppose que le téléphone mobile dispose par exemple des codages de source FR et HR, il envoie ces deux types de codage de source à l'unité d'émission et/ou de réception.

Puis, l'unité d'émission et / ou de réception sélectionne un parmi les types de codage de source reçus et renvoie celui-ci audit terminal de sorte qu'une communication sans transcodage est établie.

La sélection du type de codage de source à renvoyer peut se faire selon différents critères. Selon un critère préféré, l'unité d'émission et / ou de réception sélectionne le premier des types de codage de source reçus.

Selon un autre critère préféré, l'unité d'émission et / ou de réception sélectionne le type de codage de source permettant le débit de données le plus élevé.

Selon la norme GSM 04.53 TFO, une trame de 20ms de longueur contient 160bits pour un mode de communication TFO selon le codage de source HR tandis qu'une trame selon le codage de source EFR ou FR contient 320 bits. Par conséquent, on préfère établir la communication selon les deux derniers modes si le débit est le critère de sélection.

Selon une seconde variante l'unité d'émission et / ou réception envoie audit terminal tous les types de codage de source autorisés sur le réseau de téléphonie mobile de sorte que le terminal peut immédiatement engager une communication sans transcodage.

L'unité d'émission et / ou de réception ne dispose pas forcément d'un codeur de source. Il est seulement équipé de moyens pour détecter les types de codages de source envoyés par un téléphone mobile et des moyens pour émettre un de ces types de codages de source. De plus, il comprend des moyens pour préparer les données dans les trames de parole codées du type de communication choisi et des moyens pour récupérer des données dans ces trames.

Puis, lors d'une étape 12, on transmet les données via le réseau de téléphonie mobile dans les trames réservées aux signaux de parole codées par le type de codage de source choisi.

Comme dans ce mode de communication, ces trames ne subissent aucun transcodage, la transmission de données est fiable, bien entendu, en faisant abstraction des problèmes de liaison de radiotéléphonie qui peuvent toujours se poser.

De plus, on dispose d'un débit brut de données qui s'élève à 13kb/s, ce qui est bien supérieur au débit pouvant actuellement être obtenu par les canaux de données SMS ou par les canaux USSD par exemple.

Selon les exigences de transmission de données, on envisage de transmettre les données de manière codée. Ainsi, lors d'une interruption de tramage ou d'une erreur dans une trame, on prévoit l'application d'un procédé dit "liaison de données" permettant la répétition des trames erronées. Aussi, on prévoit un codage spécifique pour que même en cas d'une brève interruption de la liaison radio avec le téléphone mobile, la transmission des données puisse être reprise au stade juste avant l'interruption.

Bien entendu, la transmission des données peut être réalisée aussi bien dans le sens téléphone mobile vers l'unité d'émission et / ou de réception que dans le sens inverse.

Dans un mode de réalisation préféré où ladite unité d'émission et/ ou réception de données est un serveur d'application ou un serveur de données avantageusement extérieur au réseau de radiotéléphonie et par exemple conforme à la norme WAP [pour Wireless application protocol en anglais], la présente invention permet à un utilisateur de disposer via son terminal de radiotéléphone d'un accès Internet accéléré sans pour autant augmenter ses coûts de communication.

## Revendications

1. Procédé de transmission de données sur un canal de parole de téléphonie mobile, entre un terminal de radiotéléphonie disposant d'au moins un type de codage de source et une unité d'émission et / ou de réception de données par l'intermédiaire d'un réseau de téléphonie mobile supportant des modes de communication avec transcodage entre différents types de codage de source et au moins un mode de communication sans transcodage pouvant être établi entre deux téléphones mobiles ayant au moins un type de codage de source en commun, et dans lequel
- lors de la négociation du mode de communication entre ledit terminal de radiotéléphonie et ladite unité d'émission et /ou de réception de données, l'unité d'émission et / ou de réception envoie un des types de codage de source disponibles dudit terminal à celui-ci pour engager ledit mode de communication sans transcodage,
- les données sont transmises via le réseau de téléphonie mobile dans les trames réservées aux signaux de parole codés du type de codage de source choisi pour le mode de communication,
caractérisé en ce ladite unité d'émission et / ou de réception est un serveur de données ou un serveur d'applications.

2. Procédé selon la revendication 1, caractérisé en ce que lors de ladite négociation du mode de communication, le terminal de radiotéléphonie envoie à ladite unité tous ses types de codage de source disponibles, et en ce que ladite unité d'émission et / ou de réception sélectionne un parmi les types de codage de source reçus et renvoie celui-ci audit terminal.

3. Procédé selon la revendication 2, caractérisé en ce que ladite unité d'émission et / ou de réception sélectionne le premier des types de codage de source reçus.

4. Procédé selon la revendication 2, caractérisé en ce que ladite unité d'émission et / ou de réception sélectionne le type de codage de source permettant le débit de données le plus élevé.

5. Procédé selon la revendication 1, caractérisé en ce que lors de ladite négociation du mode de communication, ladite unité d'émission et / ou réception envoie audit terminal tous les types de codage de source autorisés sur le réseau de téléphonie mobile.

6. Procédé selon l'une quelconque des revendications 1 à 5, caractérisé en ce que ledit mode de communication sans transcodage est un mode de communication sans transcodage selon la norme ETSI GSM 04.53 TFO.

7. Procédé selon l'une quelconque des revendications 1 à 6, caractérisé en ce que ladite unité d'émission et / ou de réception est disposée dans un réseau de téléphone filaire.

8. Procédé selon l'une quelconque des revendications 1 à 7, caractérisé en ce que le terminal de radiotéléphonie est un téléphone mobile ou un ordinateur portable équipé de moyens pour communiquer via le réseau de téléphonie mobile.
